Europäisches Patentamt

European Patent Office

Office européen des brevets

(19)

(11) Publication number: **0 107 204**
**A1**

# (12) EUROPEAN PATENT APPLICATION

(21) Application number: **83110635.6**

(22) Date of filing: **25.10.83**

(51) Int. Cl.³: **C 02 F 1/66**

(30) Priority: **27.10.82 SE 8206091**

(43) Date of publication of application: **02.05.84**
**Bulletin 84/18**

(84) Designated Contracting States: **AT BE CH DE FR GB IT LI LU NL SE**

(71) Applicant: **SYDKRAFT AB, Carl Gustafs väg 1, S-217 01 Malmö (SE)**

(72) Inventor: **Sverdrup, Harald, Kämnärsvägen 9M:237, S-222 46 Lund (SE)**

(74) Representative: **Asketorp, Göran P. et al, Lars Holmqvist Patentbyra AB Box 4289, S-203 14 Malmö 4 (SE)**

(54) **A method for neutralization of acidified water-courses.**

(57) The present invention refers to a method for neutralization of acidified water-courses like races, rivers, etc. A limestone suspension with grain sizes of between 0 and 0.010 mm and a dry content of about 70 percent is pumped out into a rapidly streaming flow resulting in a good dissolution, spreading and almost instantaneously neutralizing effect.

EP 0 107 204 A1

0107204

1

## A METHOD FOR NEUTRALIZATION OF ACIDIFIED WATER-COURSES

The present invention relates to a method for neutralization and especially to lime treatment of acidified water-courses like races, rivers and similar and more particularly to the addition of limestone.

The acidification of our water-courses and lakes is a problem of growing importance. Already today a large number of lakes are considered as more or less dead with regard to the animal and plant life and above all with regard to fish.

In heavily streaming water-courses it is first of all the salmon which is affected being very sensible to pH-variations. A lowering of the pH-value with as little as 0.2 units results in that the salmon is more or less eliminated. Especially the salmon-fry is affected causing enormous effects on the salmon cultivations.

The acidification effect is often of the kind that it does not show more than during a very short time of the year, especially at the time of the spring flood or in the autumn. Very often it is altogether a question of not more than 20 to 40 days per year. Usually such "blows" of acid are very heavy and are strong enough to eliminate the animal and plant life, even if the pH lies around normal during the rest of the year.

The methods up to now exclusively aim at manually adding a large excess of lime and then first of all to lakes. A relatively coarse-grained limestone is used, usually with a grain size of not more than 1 mm. This product is cheap but takes a proportionally long time to dissolve and often it is not dissolved until lying on the bottom of the stream, where it is of no use, or it is dissolved first when it has come out into the sea or a lake. Thus, the addition of lime must be done with a large excess in order to achieve an effect. However, a dosage of excess has shown to be ineffective when these blows of acid occur, due to that the effect is very short by the fact that the lime sinks to the bottom as well as that the effect often occurs too late as the lime added not easily dissolves. The poor effect of conventional methods is also due to depositions on the grains. Since the effect is short but the dosage during a certain period is constant the addition of lime must be repeated with short intervals. The doses of lime are usually estimated to maybe 5 to 10 years but the effect often ceases after about 2 years.

In some lakes a change of water with an interval of a couple of months often takes place, and this also results in that the effect of an addition of lime soon disappears, even when added in excess. The methods of today are very much hazardous, as there are neither regulations nor supervision possibilities. The procedure is often the following: a large amount of lime is added, the pH is measured and in view of the thus obtained pH-value more lime is eventually added. Many times the measurement is of no value, as the measuring does not take place where the real effect is achieved. The regular control is not made very carefully, since normally there is no superintendence at lakes and similar.

Another previously known method to lower the extent of acidity in acidified waters is to lead acidified water directly down into a bed with larger limestones, the bed is fluidized, whereupon the rubbing which occurs between the particles causes the size of particles to decrease, simultaneously as the lime is dissolved in the water thus lowering its degree of acidity. This method is advisable for small water quantities, as it does not require any larger arrangements. The method is especially suitable for amounts of water within the range of one or several cubic metres per second.

With regard to water-courses like races and rivers and especially large rivers, there is today no method to get a really effective and positive result. The streaming in the rivers are often so heavy, especially at the spring flood, that with a limestone meal having a grain size of up to 0.1 and 0.2 mm the time for having a neutralization effect is so long that the result is obtained first maybe out at sea or in a lake which the river runs out into. At a spring flood the amount of water can be up to 1000 $m^3$ per second and more.

Furthermore, with the methods of today where lime is added manually, often only a local effect or an effect along a string in the river is obtained. The transverse distribution of the lime is poor and thereby also the overall effect.

Another drawback with the limestone meal used today is that it is a dry powder. This makes it both difficult to dose and difficult to handle. As it cannot be pumped out, different kinds of screw-feeders have to be used or the powder has to be added by hand. By the fact that the effect often due to the difficulty of the limestone particles to dissolve is obtained a long time later in the water system the control and the regulation of the lime treatment is difficult or even impossible. On the spot where the measuring takes place the effect is not optimal.

Neutralization is especially a problem when treating only slightly acidified waters, waters having a pH of around 6. Conventional methods are effective when applied to waters with a pH of around 3 and 4, but with regard to waters with a pH of around 6 and 7 the present method is up to now the only effective one.

An object with the present invention is to provide a method for neutralization of large quantities of water, e.g. a spring-flood which may contain amounts of water of up to 1000 $m^3$ per second.

Another object with the present invention is to provide a method for neutralizing acidified water-courses as early as possible, i.e. as close to the source as possible.

Still another object with the present invention is to provide a method by means of which existing plants like power stations, a dam or similar can be used, and which method is easily carried out.

Still further another object with the present invention is to provide a method using a product which is easy to handle and which method furthermore is more economical than the present methods.

According to the present invention these objects are achieved by means of a method for neutralization of acidified water-courses, like rivers etc. through lime treatment, whereby limestone meal is added directly in a rapidly streaming flow, the limestone meal having a particle size of 0 to 0.010 mm. The limestone meal is preferably added in the form of a suspension having a dry content of about 70 percent. The limestone suspension is fluid and pumpable.

The invention is described below with reference to the accompanying drawings, where Fig. 1 is an example of a plant for carrying out the method according to the invention. Fig. 2 is a diagram showing the dissolution for limestone meal with different particle sizes, and finally, Fig. 3 shows the change of pH with regard to the time for the suspension according to the present invention compared to prior art limestone meals.

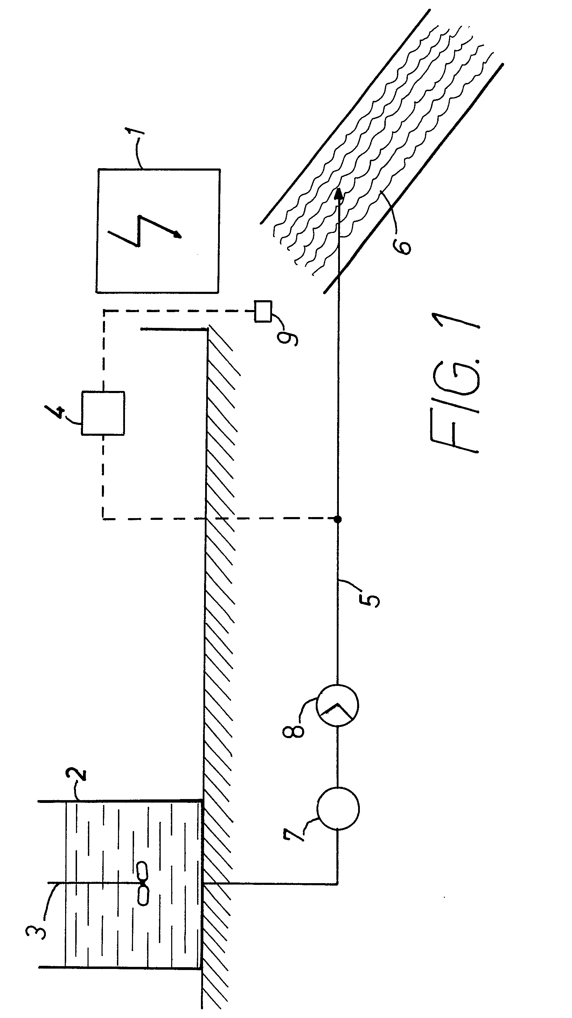

Fig. 1 schematically shows a plant for carrying out the method according to the present invention. In the embodiment shown the method according to the invention is used at a power station. The plant comprises a power station 1 with a conventional turbine (not shown) and close to the power station, a tank 2 is placed comprising an agitator 3. Between the tank 2 and the power station 1 a conduit 5 runs, and the flow in said conduit is regulated by means of the regulation unit 4 connected to a sensor 9, and the conduit 8, respectively, with respect to e.g. pH-value and/or flow. To the tank 2 a pump 7 and a dilution unit 8 are connected.

In accordance with one preferred embodiment the limestone suspension stored in the tank 2 is pumped through the conduit 5 and the dilution unit 8 to the turbine of the power station, and preferably to the outlet of the turbine in order to have a good spreading and to take advantage of the existing vacuum.

In accordance with another embodiment the limestone suspension is added before the power station, in connection with a screen, a dam or the like. It is then spread by e.g. a conduit provided with holes and arranged transversely to the flowing direction of the water-courses.

The latter embodiment has the advantage of neutralizing the water at an early stage thus preventing corrosion of the pipes, the turbine, etc.

The purpose of the pump is to give the flow a sufficiently high flowing rate in order to avoid freezing. Furthermore, the limestone suspension often has to be diluted for avoiding clogging of the conduits. The diluted flow is then added to the water-course through the turbine or earlier, as described above. By the fact that the limestone suspension is added a rapidly streaming flow, excellent spreading and dissolving are obtained.

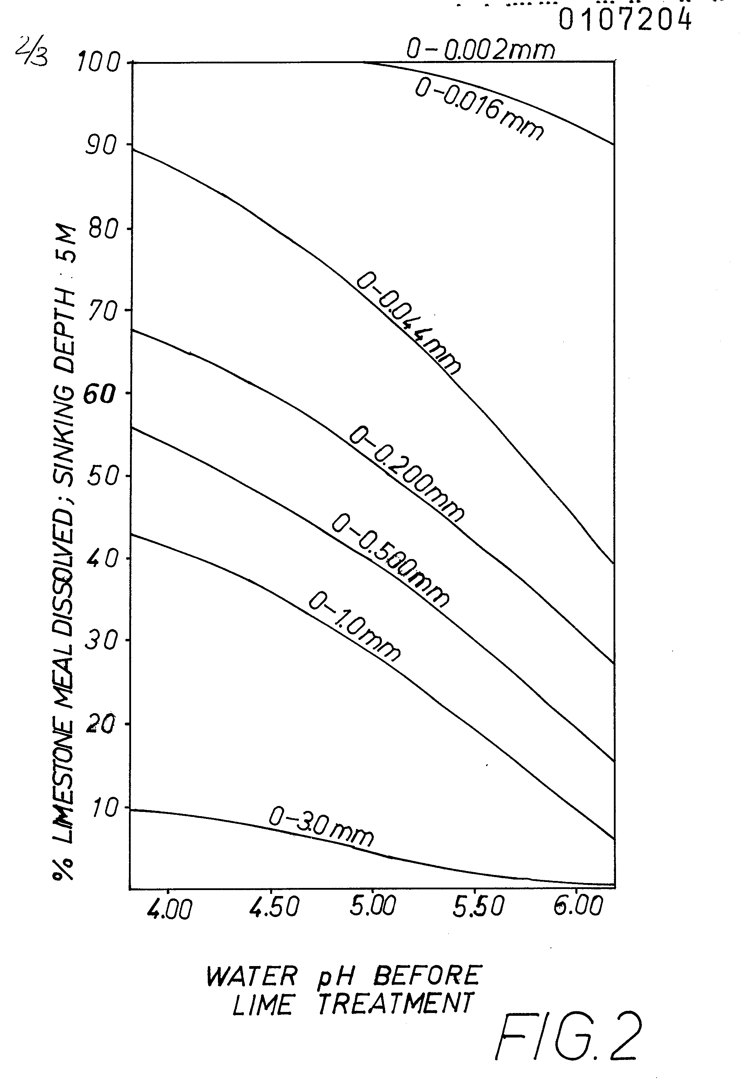

Fig. 2 shows the dissolving of limestone meal with different particle size. The curves refer to limestone meals with the particle sizes: 0-3.0 mm, 0-1.0 mm, 0-0.500 mm, 0-0.200 mm, 0-0.044 mm, 0-0.016 mm and 0-0.002 mm.

The suspension according to the present invention having a particle size of 0-0.010 mm has a dry content of about 70 percent. This product is very easy to handle, it can be pumped and thereby added directly through valves and hoses. From Fig. 2 it is clearly evident that the smaller the particles the better the result.

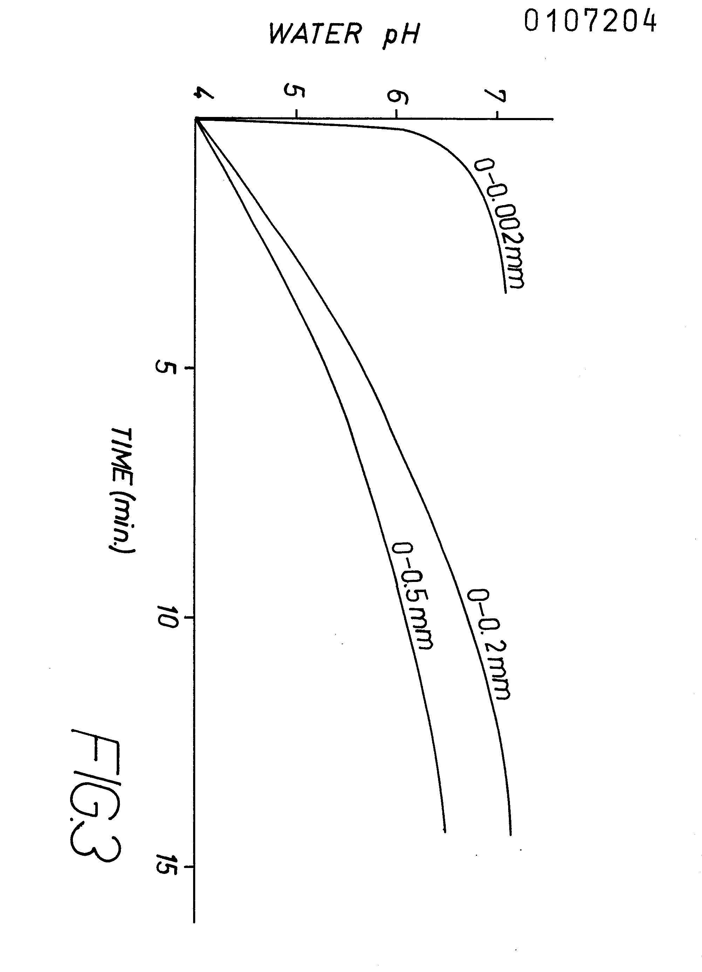

From Fig. 3 it is clearly evident that the special limestone meal used in the present invention has an essentially better effect than the conventional limestone meals used. The limestone meal according to the present invention is very rapidly dissolved and this is very important as the water in a river or race flows several kilometres in just a few minutes.

From the above-mentioned it is evident that the advantages with the present invention in relation to previously known technique for neutralization of acidified waters are many and important. With the methods used up to now it has not been possible to manage rivers with extensive water contents and especially during the spring and autumn when the amounts of water can be up to 1000 $m^3$ per second or more. The conventional methods have substantially been used for neutralizing lakes and the like. The limestone suspension according to the present invention is dissolved to 100 percent. The corresponding value for a conventional limestone meal is about 40 percent.

With conventional methods using a limestone meal with a relatively large grain size there is a very long delay, what time is concerned, of about 5 to 15 minutes, before the desired pH-value is reached. In the case of lime treating a strong race or similar it is quite obvious that these methods are almost worthless. The lime treatment effect is maybe reached first out at sea. In e.g. a salmon cultivation it is of extreme importance that a narrow pH-interval is maintained all the time, smaller changes may more or less eliminate the whole fish stem.

The limestone suspension according to the present invention gives a very rapid neutralization, 0.01 to 0.1 minute (cf. Fig. 3). The economy is considerably more favourable with the limestone suspension and the method disclosed according to the present invention compared to previous methods taking into account the fact that the meal of the present invention gives a neutralization effect of 100 percent compared to around 40 percent for conventional meals.

According to the present invention an almost instantaneous neutralization is achieved which means that the addition of lime can be supervised and very carefully controlled.

The invention has been described above with reference to special embodiments. Evidently various modifications can be made by a person skilled in the art and the invention is only limited by the claims below.

7

CLAIMS

1. A method for neutralization of acidified water-courses like races, rivers, etc. by lime treatment, c h a r a c t e r- i z e d in that a limestone meal having a grain size of 0-0.010 mm is added directly into the water-course.

2. A method according to claim 1, c h a r a c t e r i z e d in that the lime treatment takes place directly at an existing power station or similar.

3. A method according to claim 2, c h a r a c t e r i z e d in that the limestone meal is added the turbine of the power station at its outlet end.

4. A method according to claims 1 or 2, c h a r a c t e r- i z e d in that the limestone meal is added at a screen through a tube provided with holes.

5. A method according to any of the preceding claims, c h a r a c t e r i z e d in that the limestone meal is added in the form of a fluid and pumpable water suspension with a dry content of about 70 percent.

6. A method according to any of the preceding claims, c h a r a c t e r i z e d in that the addition of limestone meal is regulated with respect to the flow and/or pH-value.

FIG. 1

2/3

FIG.2

FIG.3

0107204

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | CHEMICAL ABSTRACTS, vol. 96, no. 16, 19th April 1982, page 442, no. 129533n, Columbus, Ohio, US & SE - A - 420 712 (STIG ARVID HENRIKSON) 26-10-1981 | 1,5,6 | C 02 F 1/66 |
| Y | POLLUTION ABSTRACTS, ESA-IRS DATABASE, file no. 18 B. BENGTSSON et al.: "Liming acid lakes in Sweden" & AMBIO, A JOURNAL OF THE HUMAN ENVIRONMENT, RESEARCH AND MANAGEMENT 9(1), pages 34-36, 1980 | 1,5,6 | |
| Y | GB-A-1 218 601 (UNIFLOC LTD.) * Page 1, lines 60-86; page 10, table III A * | 1,5,6 | |
| Y | US-A-4 320 012 (G.F. PALM et al.) * Column 2, lines 16-21; column 3, lines 36-56 * | 1,5,6 | TECHNICAL FIELDS SEARCHED (Int. Cl. 3) C 02 F |

The present search report has been drawn up for all claims

| Place of search THE HAGUE | Date of completion of the search 01-02-1984 | Examiner TEPLY J. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82